# EUROPEAN PATENT APPLICATION

(11) **EP 1 427 089 A2**
(43) Date of publication of application: **09.06.2004**
(21) Application number: 03090426.2
(22) Date of filing: 09.12.2003
(51) Int. Cl.: H02K 5/18, H02K 5/16, H02K 21/22

(54) **Electric motor with external rotor**

(30) Priority: 12.01.2000 US 175782 P
(62) Divisional of application: 01942479.5
(71) Applicant: Mol Belting Company, Grand Rapids, Michigan 49544 (US)
(72) Inventor: Wolters, Laurens, 7131 GL Lichtenvoorde (NL)
(74) Representative: Pfenning, Meinig & Partner

(57) **Abstract**

An electric motor (10) comprising a shaft (24) to which a stator (20) is fixedly mounted and a rotor (22) is rotably mounted. The shaft (24) defines a longitudinal axis having opposing ends that are adapted to be fixedly mounted to a structural support. The stator (20) preferably comprises multiple windings (56) capable of reversible current flow so that the winding polarity may be altered. The rotor comprises multiple magnets (74, 260) that are radially spaced about the periphery of the stator. Each of the magnets has at least one predetermined pole. A controller (12) is coupled to the windings and controls the direction of the current flowing through the windings in such a manner to initiate and control the rotation of the rotor about the stator. The rotor comprises an end cap (82) for at least partially closing an open end of a tubular housing (80). A plurality of fins (96) are disposed on the end cap.

## Description

### BACKGROUND OF THE INVENTION

### Field of the Invention

The invention relates to an electric motor; and more particularly, to an electric motor having an external rotor.

### Description of the Related Art

Electric motors are commonly used in many different commercial and residential applications. An electric motor typically comprises a rotor and a stator, each of the rotor and stator having multiple magnets disposed about the periphery.

The poles of the magnets on the rotor and the poles of the magnets on the stator are controlled such that the poles of the rotor are drawn to or repulsed from a corresponding pole on the stator to effect the rotation of the rotor relative to the stator.

The control of the poles is normally accomplished by at least one of the series of magnets on either the rotor or stator being made from an electromagnetic winding whose polarity can be altered by changing the direction of current passing through the winding.

In most electric motors, the stator is part of or forms the external housing of the electric motor and the rotor comprises a shaft mounted within the stator for relative rotation therein. In some applications, it is desirable for the rotor to form the exterior of the housing. An electric motor having an external rotor can be used to drive belts and the like while being positioned within the interior of the belt. A suitable application for such a configuration would be a materials handling environment.

One difficulty associated with electric motors with external rotors is that the power output is typically sufficiently small so that only short material handling runs can be driven by a single motor and only relatively light weight articles can be propelled by the motor. Greater output power from an electric motor with external rotor requires a larger diameter or length of the motor. An increased diameter is not desirable because of added weight and the balance condition of the rotor. The increasing of the length of the rotor can result in deflection of the shaft mounting the stator in response to the magnetic attraction between the rotor and the stator causing the rotor and stator to contact, reducing the motor's performance or, in extreme cases, prohibiting motor rotation altogether.

### SUMMARY OF THE INVENTION

The invention relates to an electric motor that comprises a shaft to which a stator is fixedly mounted and a rotor is rotatably mounted. The shaft defines a longitudinal axis having opposing ends that are adapted to be fixedly mounted to a structural support. The stator preferably comprises multiple windings capable of reversible current flow so that the winding polarity may be altered. The rotor comprises multiple magnets that are radially spaced about the periphery of the stator. Each of the magnets has at least one predetermined pole. A controller is coupled to the windings and controls the direction of the current flowing through the windings in such a manner to initiate and control the rotation of the rotor about the stator.

The rotor preferably comprises a tubular housing having a longitudinal axis, with the magnets being operably coupled to the interior of the tubular housing. In this configuration, the housing rotates relative to the stator and functions as an external drive mechanism for the electric motor. Preferably, the magnets are made from Neodymium.

The magnets can comprise a plurality of magnetized metal rings encircling the stator or discrete magnets radially spaced about the periphery of the stator.

The magnetized metal rings preferably comprise radial segments of alternating polarity.

The segments span an arc of approximately 30 degrees on center.

The rotor can further comprise a cylindrical cage that carries the multiple magnets and is axially positioned within the tubular housing such that the stator is received within the cylindrical cage. Preferably, radially spaced magnet openings are formed in the cage, with each of the openings receiving a magnet. The openings and magnets are preferably spaced approximately 60 degrees on center about the cage. The cage can further include axially oriented slots in which is received a magnet cover that carries the magnets. When the magnet cover is received within the magnet slot, the magnets are also received within the magnet openings.

The stator preferably comprises a winding core that defines a longitudinal axis. The core has multiple winding poles about which the windings are mounted. In the preferred form, the windings are mounted on the core such that a winding longitudinal axis forms a first acute angle with the winding core longitudinal axis. The first acute angle is preferably 10 degrees.

The winding core can comprise a plurality of discs, each of which has an axial opening that is sized to slidably receive the shaft to thereby mount the plurality of discs to the shaft. Each of the discs can include one of a key and keyway with the shaft comprising the other of the key and the keyway so that the key is received within the keyway upon the mounting of the disc to the shaft and thereby align the disc relative to the shaft. The one of the key and the keyway of the shaft can be oriented at a second acute angle relative to the shaft longitudinal axis, which is also preferably 10 degrees.

The winding poles can be spaced about the stator at any desired radial spacing. However, it is preferred that the winding poles be spaced at approximately 40 degrees on center or at approximately 20 degrees on center.

The winding poles can include a cap at a distal end thereof to help in retaining the windings on the winding poles. Alternatively, the winding core can further comprise tabs that are disposed between the winding poles and having diverging distal ends that aid in retaining the windings on the winding poles. The stator can further comprise multiple winding assemblies, each of which is slidably mounted to the shaft. Each of the winding assemblies comprises multiple windings in and of itself. A spacer is preferably mounted to the shaft and disposed between the adjacent winding assemblies to thereby effectively increase the shaft cross section to increase the bending resistance of the shaft. A resin can be disposed in the spaces between the spacer and the winding assemblies to effectively integrate the winding assemblies and the spacer to further increase the bending resistance of the shaft.

Preferably, a bearing is used to rotatably mount the housing to the shaft. The bearings are located on the shaft near each end of the shaft. The rotor can further comprise opposing end caps that close the open ends of the housing and mount the housing to the shaft. The end caps can have a central hub that defines an opening through which the shaft is received. The end caps further can comprise a peripheral wall that is received within the housing interior to mount the housing to the shaft. The central hub preferably includes a bearing recess that encircles the central opening and receives a bearing for rotatably mounting the rotor to the shaft. A distal edge of the peripheral wall is preferably tapered to enhance the ease of insertion of the peripheral wall into the housing. Additionally, the tapered distal edge also aids in centering the shaft relative to the housing. Each end cap can further comprise a cover that seals the central opening relative to the shaft.

Preferably, the central hub and the cover each have corresponding concentric rings that intermesh to form a labyrinth seal when the cover is mounted to the end cap.

The electric motor can further comprise a mounting block for fixedly mounting the shaft ends to a structural support.

### BRIEF DESCRIPTION OF THE DRAWINGS

In the drawings:
FIG. 1 illustrates an electric motor with an external rotor according to the invention;
FIG. 2 is a sectional view of the electric motor taken along line 2-2 of FIG. 1;
FIG. 3 is a sectional view of the electric motor taken along line 3-3 of FIG. 2;
FIG. 4 is a perspective view of one coil module of the stator according to the invention;
FIG. 5 is a perspective view of the rotor cage according to the invention;
FIG. 6 is a perspective view of a jig for assembling the stationary magnets of the rotor cage;
FIG. 7 is a perspective assembly view showing the major steps of assembly for the stator;
FIG. 8 is an assembly view showing the major steps of assembly of the rotor to the stator;
FIG. 9 is a perspective view of a treadmill incorporating the electric motor with external rotor according to the invention; and
FIG. 10 is a perspective view of a portion of a materials handling system incorporating the electric motor with external rotor according to the invention;
FIG. 11 is a longitudinal sectional view of the second embodiment electric motor illustrating the spatial relationship between the shaft, rotor, and stator of the second embodiment;
FIG. 12 is a sectional view taken along line 12-12 of FIG. 11;
FIG. 13 is a plan view of the shaft illustrating an angled keyway;
FIG. 14 is an enlarged partial sectional view of the one end of the shaft illustrating the internal passage for electrical conduits;
FIG. 15 is a longitudinal sectional view of the stator mounted to the shaft and excluding the rotor and end caps for clarity;
FIG. 16 is a sectional view taken slang line 16-16 of FIG. 15 with the shaft removed for clarity;
FIG. 17 is a longitudinal sectional view of the rotor and housing with the stator, shaft, and end caps removed for clarity;
FIG. 18 is a sectional view taken along line 18-18 of FIG. 17 and illustrating the change of direction of the magnetic flux for the stator;
FIG. 19 is an end view of an end cap for closing an open end of a housing for the electric motor according to the invention;
FIG. 20 is a sectional view taken along line 19-19 of FIG. 19;
FIG. 21 is an end view of a cover for sealing the cover relative to the shaft;
FIG. 22 is a sectional view taken along line 22-22 of FIG. 21; and
FIG. 23 is a side view of the assembled electric motor and illustrates the mounting block, end caps, and seals.

### DESCRIPTION OF THE INVENTION

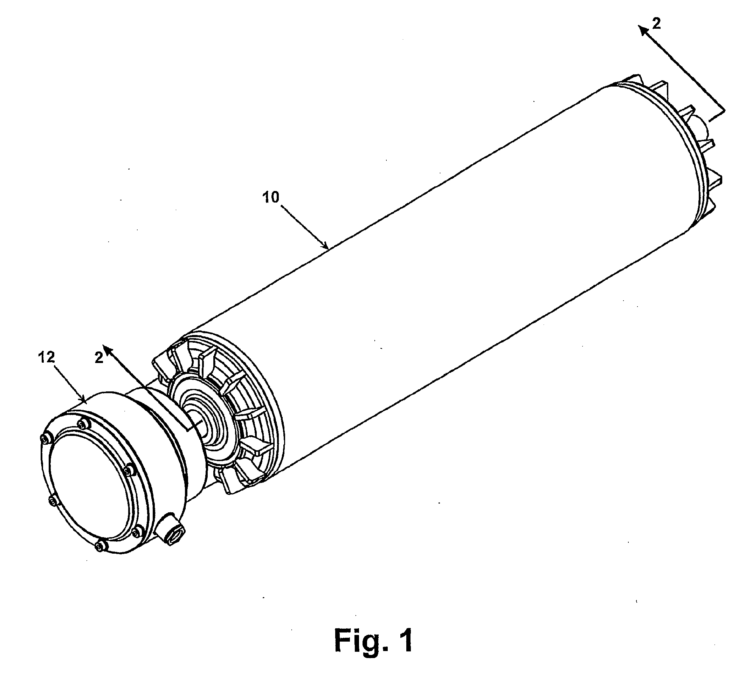

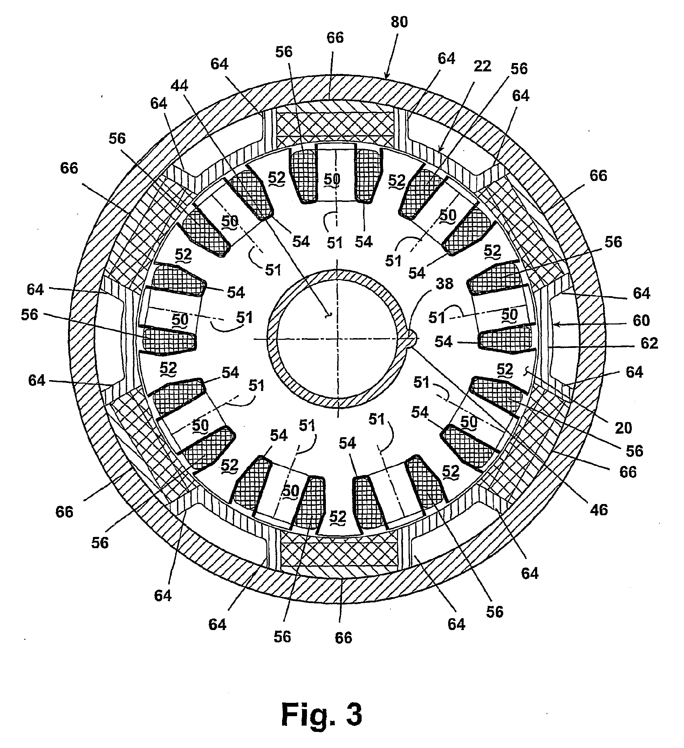

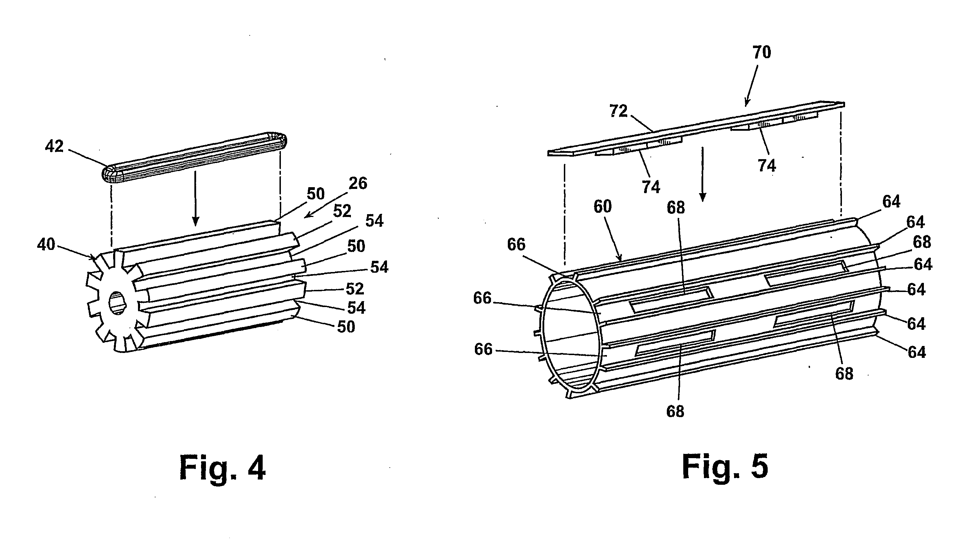

FIGS. 1-3 illustrate an electric motor 10 in accordance with the invention along with a control system 12 for controlling the operation of the electric motor 10. The electric motor 10 comprises a stator 20 positioned within a rotor 22. The stator 20 comprises a shaft 24 on which are fixedly mounted multiple winding assemblies 26 (see also FIG. 4), separated by a spacer 28. Locking washers 30 fix the winding assemblies 26 on the shaft 24 relative to the spacer 28.

The shaft 24 preferably has at least hollow end portions to form a conduit for the passage of electric wiring and the like as needed from the winding assemblies to the motor exterior. The shaft 24 has a centrally located large diameter portion 24a divided by a collar 36 that interacts with the spacer 28 to limit the longitudinal movement of the spacer 28 along the shaft 24 during assembly. The shaft includes multiple reduced diameter portions 24b, 24c, and 24d on each end of the large diameter portion 24a. The junction of each stepped-down diameter portion 24a-d creates a corresponding shoulder 25b, 25c, and 25d. A key 38 extends longitudinally along the shaft 24.

The spacer 28 comprises a central hub 31 and a peripheral wall 33 connected by a web 34. Multiple openings 35 extend through the web 34. A radial opening 37 extends through the peripheral wall 33 and intersects the web opening 35 to fluidly connect the exterior of the peripheral wall 33 with the space between the peripheral wall 33 and the hub 32. One end of the hub 32 includes an annular stop 39 extending into the central opening and is sized to abut the shoulder 36 of the shaft when the hub 32 is slidably mounted onto the shaft and thereby limit the longitudinal movement of the spacer.

The winding assemblies 26 each include a winding core 40 comprising a plurality of axially aligned disks 42 having an axial opening 44 and a keyway 46. The aligned axial openings 44 and keyways 46 of the plurality of disks 40 form an axial opening and keyway for the winding core 40.

The periphery of each disk 42 is formed with multiple winding poles 50, which are preferably spaced at 40 degree increments about the disk 42 and are separated by tabs 52. The aligned winding poles 50 define a winding axis 51. A winding channel 54 is formed about the periphery of each winding pole 50 and is sized to receive a winding 56 having a central pass through opening, permitting the winding 56 to be slidably mounted onto the winding pole 50.

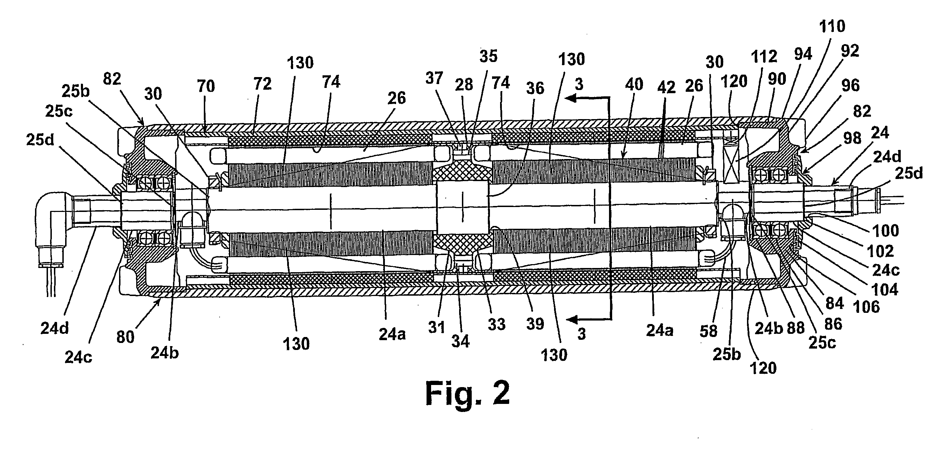

A winding 56 is provided for each of the winding poles 50. The windings 56 are preferably formed from multiple windings of electrically conductive wire whose interstitial spaces are filled with an epoxy and heated to cure the winding into a rigid structure. Each winding is connected to the electrical control system 12 through a lead 58 (FIG. 2) passing through the hollow interior of the shaft 24.

The rotor 22 comprises a rotor cage 60, preferably an aluminium casting, having a generally cylindrical body 62 from whose outer surface extends pairs of parallel fingers 64, defining therebetween magnet slots 66. The magnet slots 66 are spaced at approximately 60 degree intervals about the periphery of the body 62. The body 62 has openings 68 located within the magnet slot 66.

The rotor 22 further comprises magnet assembly 70 comprising a cover 72, preferably made of steel, and two pairs of magnets 74. The magnets 74 are preferably positioned on the cover 72 so that the magnets 74 will fit within the magnet slots 66 of the body 62 when the cover 72 is positioned within the magnet slots 66.

The electric motor 10 further comprises an exterior housing 80 in which the rotor cage 60 is slidably received and the stator 20 is slidably received within the rotor cage 60. The housing is preferably made of carbon steel. The end of the housing 80 is closed by end caps 82, which are preferably made of aluminium. The end caps 82 comprise a central hub 84 having a recess in which is slidably mounted a ceramic bearing 86, which is held within the hub 84 by a snap ring or similar retainer 88, received within an axial groove near the interior opening of the recess.

The central hub 84 is connected to a peripheral wall 90 by a radial web 92. The peripheral wall 90 has an outer diameter substantially equal to the inner diameter of the housing. The radial web 92 includes an annular stop 94 extending radially beyond the peripheral wall 90. The annular stop 94 has an outer diameter greater than the inner diameter of the housing 88 and limits the insertion depth of the end cap peripheral wall 90. A series of fins 96 are formed in the radial web 92 and extend axially inwardly and outwardly therefrom. The fins 96 aid in the cooling of the interior temperature of the electric motor 10 as the motor rotates. In essence, the fins 96 function as a heat sink, which are air cooled.

The end caps 82 further include a cover 98 having an axial opening 100 into which extends an annular stop 102. Concentric rings 104 are formed in the cover 98 and correspond to concentric rings 106 on the exterior of the end cap 82. The concentric rings 104 and 106 nest when the cover 98 is slidably mounted onto the shaft 24 and form a labyrinth seal to block the introduction of dust and other particles into the interior of the motor.

The control system 12 comprises a hall sensor 110 located on the shaft 24 and corresponding elements 112 mounted on the rotor cage 60. The elements 112 are positioned to correspond with the poles of the magnets 74. The hall sensor 110 is connected to an electrical circuit (not shown) that alters the direction of the current passing through the windings 56 to propel the rotor cage 60 about the stator 20. This type of electrical control is widely known and will not be described in greater detail.

### ASSEMBLY OF THE ELECTRIC MOTOR

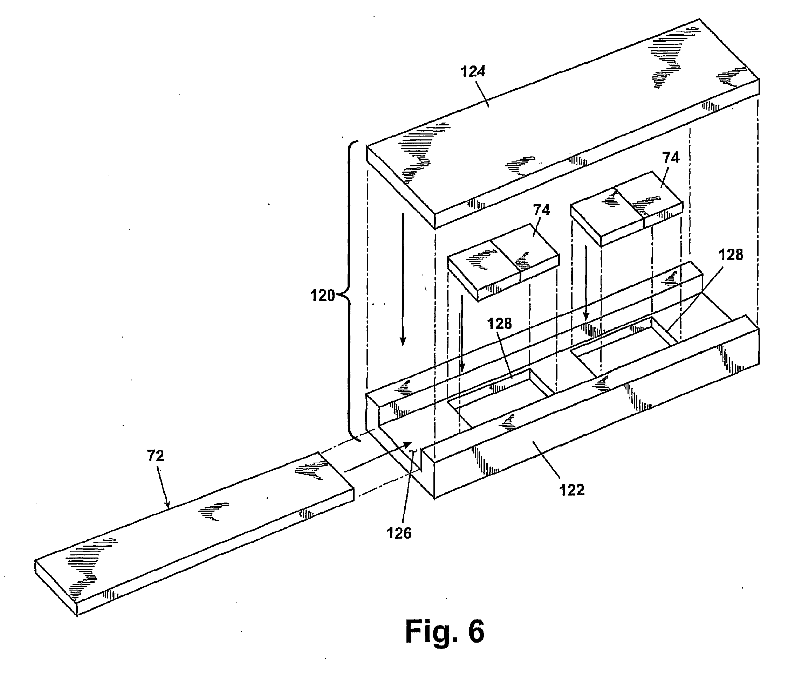

The assembly description below contains many steps. The sequence of many of these steps is not important. Therefore, the assembly description is mainly for illustrating the steps needed to assemble the electric motor 10 and the interconnection of the various parts. The assembly description is not intended to be limiting in the sequence of the assembly steps. Referring to FIG. 6, the assembly of the electric motor 10 begins by assembling the magnets 74 to the cover 72. The magnets 74 are preferably made from neodymium, which has a very high magnetic density. For example, each of the magnet pairs for one magnet slot 66 has 350 pounds of separation force. Given the large magnetic density and the correspondingly large magnetic forces for the magnets 74, it is imperative that the magnets be handled with care and not brought within close proximity to each other or to another magnetic object during assembly, unless it is desired for the magnets to magnetically couple with the object.

Referring to FIG. 6, in assembling the magnets, a jig 120 comprising a base 122 and a cover 124 is provided to attach the magnets 74 to the cover 72 in a predetermined orientation so that the magnets will fit within the magnet opening 68 in the body 62 of the rotor cage 60. The jig bottom 122 has a U-shaped cross section defining a channel 126, which is sized to slidably receive the cover 72. Positioning openings 128 are provided in the channel 126 at a spacing corresponding to the spacing of the openings 68 in the magnet slots 66.

To assemble the magnets 74 to the cover 72, the magnets in pairs are positioned within the positioning openings 128. The openings are sized so that the top of the magnets 74 are co-planar with or slightly below the bottom of the channel 126. The cover 124 is then placed atop the jig bottom 122 to close the open top of the channel 126. The cover is preferably clamped in place to the jig 120. The magnet cover 72 is then slidably inserted into one of the open ends of the jig 120. As the steel magnet cover 72 encounters the magnets 74, the magnets will attach themselves to the magnet cover 72. The coefficient of fiction between the magnet cover 72 and the magnets 74 is sufficiently low enough that a relatively small force (approximately 70-80 pounds for the magnets of the invention) is required to slide the cover 72 with respect to the magnets 74 as compared to the separating force (approximately 350 pounds) to pull the magnets off of the cover 72. If need be, a small amount of lubricant can be placed on either the cover 72 or the magnets 74 to reduce the coefficient of friction and thereby reduce the force needed to slide the cover 72 over the magnets 74. When the cover 72 is completely positioned within the jig 120, the jig cover 124 is unclamped and removed. The magnet cover 72 is then lifted out of the open top of the channel 126, carrying with it the magnets 74, which are properly oriented for insertion into the rotor cage 60. The process of mounting the magnets 74 to the magnet cover in their predetermined position is repeated for the number of magnet assemblies 70 required for the particular rotor cage 60. As illustrated, six magnet assemblies 70 are required. However, fewer or more magnet assemblies may be used depending on the size of the motor. The completed magnet assemblies 70 should be stored far enough away from each other after assembly to avoid the magnets of one magnet assembly from coupling with another magnet assembly. Once the magnet assemblies 70 are assembled, they are placed into the magnetic slot 66 of the rotor cage 60, preferably by simultaneously punching the magnet assemblies 70 within the magnet slot 66. Since the rotor cage 60 is preferably made from a non-magnetic material, such as aluminium, the magnetic interaction between the magnets 74 and the rotor cage 60 is not of great importance.

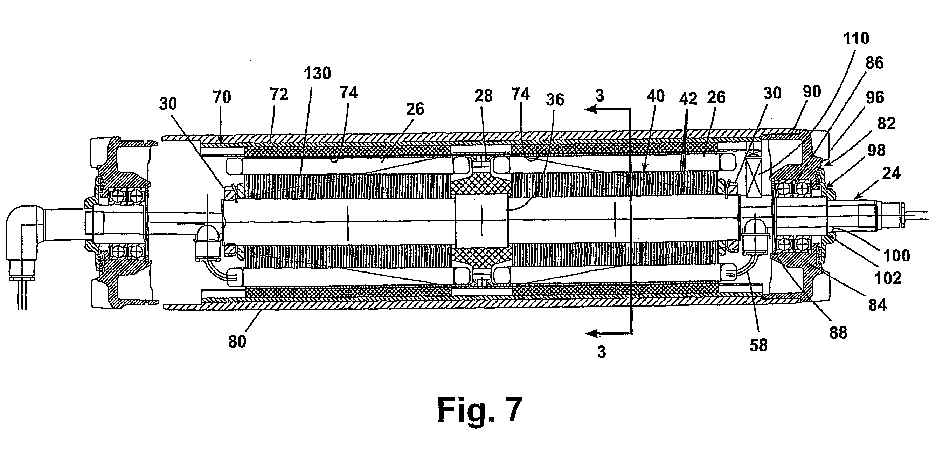

Moving on to the assembly of the stator 20, initially, each winding core 40 is assembled in a traditional manner. The windings 56 are slidably mounted over the winding poles 50. This process is repeated for the number of winding assemblies needed for the particular motor. As illustrated, the electric motor 10 requires only two winding assemblies 26. However, it is within the scope of the invention for less or more winding assemblies to be needed and is dependent upon the particular operational parameters, especially power output, of the electric motor 10. For a given winding assembly 26, the more winding assemblies, the more power the motor will generate. Referring to FIG. 7, once the winding assemblies 26 are completed, the stator 20 is assembled by mounting the winding assemblies 26, spacer 28, and one of the end caps 82 to the shaft 24. Initially, the spacer 28 is slidably mounted onto one end of the shaft until the annular stop 37 abuts the shaft collar 36. The winding assemblies 26 are then oriented relative to the shaft 24 so that the keyway 46 in the winding assemblies 26 aligns with the key 38 on the shaft 24.

The winding assemblies 26 are slid onto the shaft 24 until the winding cores 40 abut the hub 32 of the spacer 28. The locking washers 30 slidably mount over the opposing ends of the shaft into abutting relationship with the winding core 40, and lock in place to hold the winding core 40 against the spacer 28, which is in abutting relationship with the shaft collar 36.

It is worth noting that when the winding assemblies 26 are mounted to the shaft 24, the inner ends of the windings 56 are received between the peripheral wall 33 and hub 32 of the spacer 28. The ends of the hub 32 and the peripheral wall 33 are in abutting relationship with the winding core 40 to effectively close off the open ends of the spacer 28 and enclose the ends of the windings 56 therein. Thus, the inner ends of the windings 56 are retained within the closed interior of the spacer 28 through which access is provided by the web openings 35 and the corresponding peripheral wall openings 37.

A resin material is injected into the closed interior of the spacer 28 through the peripheral wall openings and web openings 35. A sufficient quantity of resin is injected to completely fill the interior of the spacer 28. The stator subassembly of the shaft 24, winding assemblies 26, and spacer 28 filled with resin, is heated to a temperature suitable to cure the resin.

The stator subassembly obtained from the shaft 24, winding assemblies 26, spacer 28, and baked resin fill yields a structure having a bending stiffness much greater than that of the shaft 24 alone. The increased stiffness is attributable to the effectively increasing cross-sectional area of the subassembly in light of the close fit between the winding cores 40 and the shaft 24, the compressive mounting between the winding cores 40 and spacer 28, and the resin filled spacer 28. The lines 130 in FIG. 2 represent an effective diameter of a shaft made in accordance with the shaft 24, but having the effective stiffness of the subassembly.

It should be noted that it is presumed by this time that the electrical leads for the windings 56 are connected to the electrical conduits extending through the interior of the shaft 24. Since the connection of the electrical leads is well known and does not form a substantive portion of the invention, it will not be described in greater detail. It should also be noted that the hall sensor 110 is mounted to the shaft 24 in a traditional manner after the shaft subassembly is completed.

Once the shaft subassembly is completed, one of the end caps 82, which already has its ceramic bearing 86 installed, is mounted onto the end of the shaft 24 by sliding the shaft through the opening in the hub 84 of the end cap until the end of the bearing abuts the shoulder 25c of the reduced diameter portion 24b of the shaft 24 and cover stop 102 abuts the shoulder 25d on the reduced diameter portion 24c of the shaft 24.

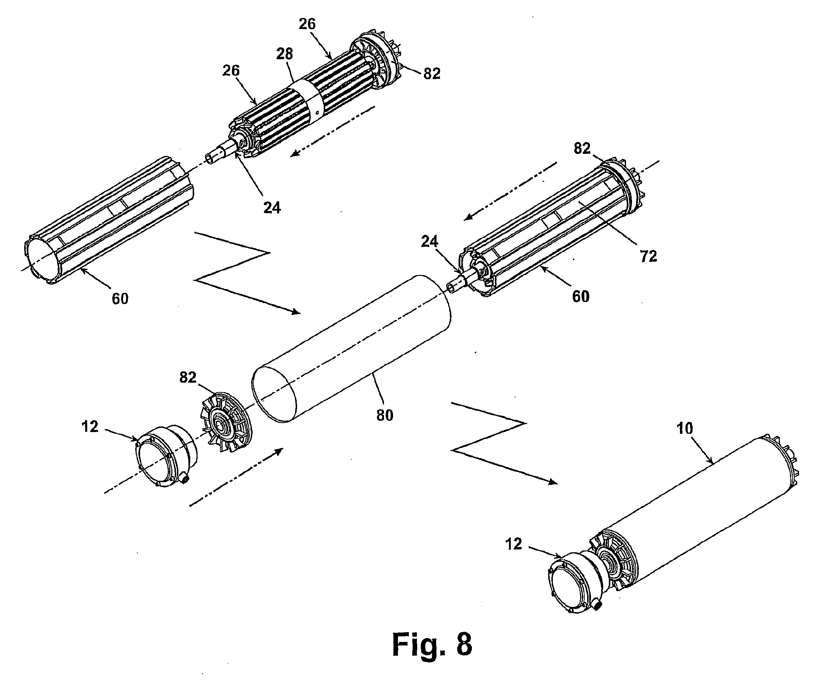

Referring to FIG. 8, the shaft subassembly along with the corresponding end cap 82 is slidably mounted within the rotor body 62. As the first winding assembly 26 is received within the interior of the rotor cage body 62, the magnets 74 will pull the windings into contact with the magnets. As with the mounting of the magnets 74 to the magnet cover 72, although the magnets have a very strong separation force, the coefficient of friction is sufficiently low enough that the stator subassembly can be slid within the interior of the rotor cage body 62. If necessary, a lubricant can be positioned on either the shaft subassembly or the interior of the rotor cage body 62 to enhance the ease of sliding.

The subassembly of the starter and rotor is slidably mounted within the housing 80. Upon the insertion of the rotor/stator subassembly, the magnets 74 will couple with a portion of the housing 80, resulting in the longitudinal axis of the housing 80 and the shaft 24 being slightly offset. As the rotor/stator subassembly is completely inserted, the tapered surface 120 on the end cap peripheral wall 90 will contact an edge of the housing and center the shaft 24 relative to the housing 80 at that end. The wedge effect of the tapered surface 120 uncouples same of the magnets from the housing 80, resulting in a skewing of the housing and shaft longitudinal axis.

Although not necessary, it is preferred that the inner surface of the housing have one or more embossments and the peripheral wall 90 of the end cap 82 have a corresponding number of indentations or grooves so that upon the insertion of the end cap peripheral wall 90 into the open end of the housing 80, the embossments will slightly deflect the peripheral wall 90 until they are received within the corresponding indentations or grooves to effectively lock the end cap 82 to the end of the housing 80.

To complete the assembly of the electric motor 10, the other end cap 82 is slidably mounted onto the opposing end of the shaft 24. It should be kept in mind that given the strength of the magnets 74 at least a portion of one side of the stator 20 will be in physical contact with the interior of the rotor cage body 62, resulting in the shaft 24 being slightly off axis with respect to the housing 80. The outer ends of the peripheral wall 90 of the end cap 82 are slightly tapered 120. With this configuration, as the second end cap 82 is inserted into the open end of the housing 80, the tapered or wedge-shaped outer edge of the peripheral wall 90 of the end cap 82 will contact the inner edge of a portion of the housing 80. The continued insertion of the peripheral wall 90 into the end of the housing 80 will start to align the longitudinal access of the shaft with the axially aligned longitudinal axes of the housing 80 and the rotor cage 60. Upon the complete insertion of the end cap 82, the winding assemblies 26 will be pulled away from their contact with the inner surface of the rotor cage body 62. The cover 98 is then slidably mounted over the shaft to close off the central hub 84 and seal the ceramic hearings 86 with respect to the atmosphere.

In the assembled position, there is approximately a.5 mm gap between the exterior of the winding assemblies 26 and the interior of the rotor cage body 62. Given the very great magnetic forces of the magnets 74, there is a tendency for the magnets to couple with the housing 80, which is fortunately resisted by the extraordinary stiffness of the stator subassembly. A motor according to the invention as described above produces peak power of 3.0 kilowatts and can operate at a steady state of 1.6 kilowatts at approximately 850 rpm with an efficiency of approximately 95%. The maximum constant torque produced is 18.2 Nm. The performance of the motor 10 is very great considering the relatively small size of the motor 10. The housing 80 has a length of approximately 417 mm and a diameter of 114.3 mm. Each winding assembly 26 is approximately 135 mm long.

### OPERATION

The operation of the motor is controlled in a well-known fashion and will only be described in general details. As with al1 DC electric motors, the rotor is advanced relative to the stator by changing the polarity of the poles on the stator to either pull or push the permanent magnets on the rotor as the case may be. The stator according to the invention has nine poles 51 formed by the windings 56 disposed at approximately 40° intervals about the periphery of the stator. The permanent magnets on the rotor are spaced at 60° increments about the periphery of the rotor. The permanent magnets have a width slightly greater than the width of the winding.

When one permanent magnet pole is centered over one winding pole, the next permanent magnet is generally centered directly between the next to adjacent poles, with a portion of the permanent magnet overlying a portion of each of the windings. The subsequent magnet 74 is once again centered over a winding pole 51. Given the fixed physical relationship between the poles of the magnets 74 and the windings 56, the hall sensor 110 can be used to sense the pole location of the magnets and output a corresponding signal, which is used by the electronic control 12 to change the direction of the current passing through the windings to flip the polarity of the windings as needed to push or pull the magnet 74 as needed to continue the rotation of the rotor. Only one hall sensor is required since the number of permanent magnets and windings are known and spaced at known relationships. However, a hall sensor could be positioned about the stator for all or some of the poles of the windings 56 if desired.

The electronic control is capable of not only advancing the rotor relative to the stator, it can also reverse the direction of the rotor with respect to the stator.

Similarly, the electronic control can effectively be used to brake either the advance or reverse operation of the electric motor. The techniques for advancing, reversing, and brake the electric motor by electronic control is well known and is not described in detail. The speed of the motor is controlled by adjusting the magnitude of the voltage applied to the windings. As the voltage increases, the speed of the motor increases proportionately. Thus, a simple and well-known voltage control is all that is needed to control the speed of the motor. An advantage of using voltage control for controlling the speed of the motor is that the speed is essentially continuously adjustable within the limitations of the voltage supply to the electric motor and the internal resistance of the particular machine being driven by the motor. During steady state operation, the motor will generate approximately 80 watts of heat energy. Given the small size of the motor compared to the power and heat it generates, it is important to dissipate the heat, especially given the negative performance impact the heat can have on the magnets 74. The fins on the end caps 82 function as an air-cooled heat sink to dissipate the heat energy emitted by the motor. As is seen in FIG. 2, the fins extend from the interior of the end cap to the exterior. The interior location of the fins aids in forcing air circulation within the interior of the motor and eliminating areas of heat build up. The rotation of the motor effects the rotation of the fins to circulate the air within the housing. An air circulation pattern within the housing can develop longitudinally by passing through the open spaces between the magnet slots 66 on the body 62. The fins on the end caps along with the shape of the rotor cage form a forced-air air-cooled heat sink that removes the heat energy without adding complexity to or increasing the size of the motor.

### APPLICATIONS

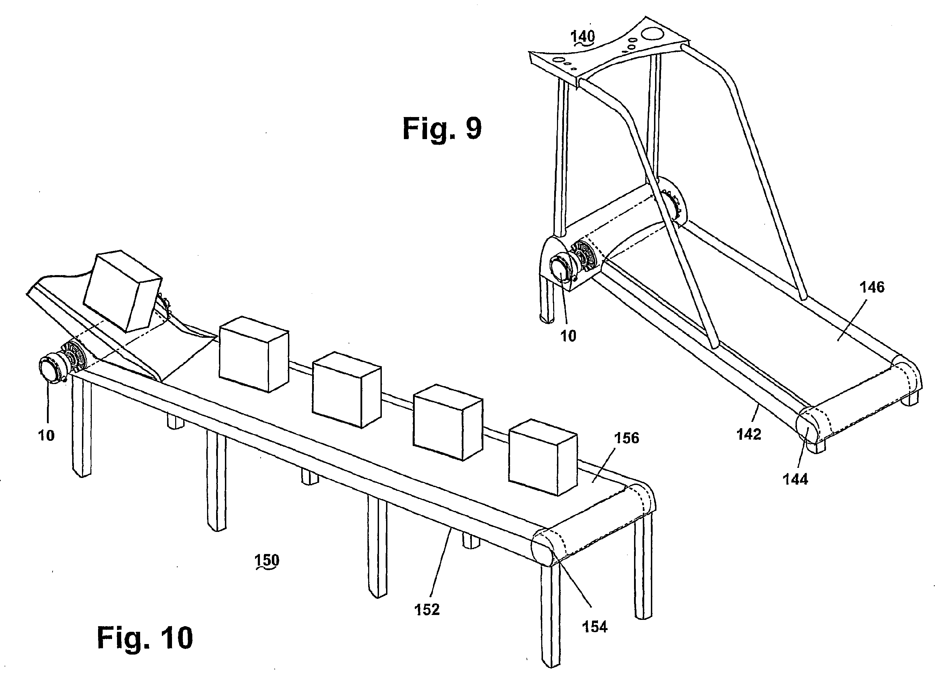

FIG. 9 illustrates one possible application for the electric motor 10 according to the invention. FIG. 9 shows a treadmill 140 comprising a deck 142 on one end is mounted an electric motor 10 according to the invention and on another end is mounted a roller 144. A belt is entrained about the housing 80 of the electric motor 10 and the roller 144 encaptures the deck therebetween. Since the belt 146 physically contacts the housing 80 of the electric motor 10, the rotation of the housing 80 will rotate the belt of the treadmill.

The electric motor 10 as described above preferably operates between 2 and 12 mph with corresponding power requirements of 0.27 kilowatts at 142 rpms and 1.60 kilowatts at 854 rpms.

FIG. 10 illustrates another application for the electric motor 10. In FIG. 10, a simple materials handling system is illustrated comprising a conveyor 150 having a deck 152, with the motor 10 mounted at one end and one or more rollers 154 mounted at various locations on the deck 152. A conveyor belt 156 is entrained about the rollers 154 and the electric motor 10. The rotation of the housing 80 affects the movement of the conveyor belt 156.

In either of these applications, the invention is advantageous over prior electric motors in that it has a relatively small diameter (114 mms) while having a relatively high output (1.6 kilowatts) for steady state operation. The low profile of the electric mo-tor 10 permits its use in a variety of applications where there are limited space requirements. The reduced profile also reduces the size of the belt and inertial braking problems associated with larger diameter traditional motors.

Another advantage of the electric motor according to the invention is that the power output of the motor can be increased by simply adding on four winding assemblies 26 along with the necessary intervening spacers 28. Such a configuration will, of course, require a longer shaft 24. However, unlike prior designs, the length of the shaft is generally unimportant because the additional winding assembly 26 can include additional spacers 28, which together, form an effectively larger diameter shaft that greatly reduces deflection that was inherent in prior art motors, eliminating the negative result of the shaft deflecting sufficiently to permit the rotor and stator to contact during operation.

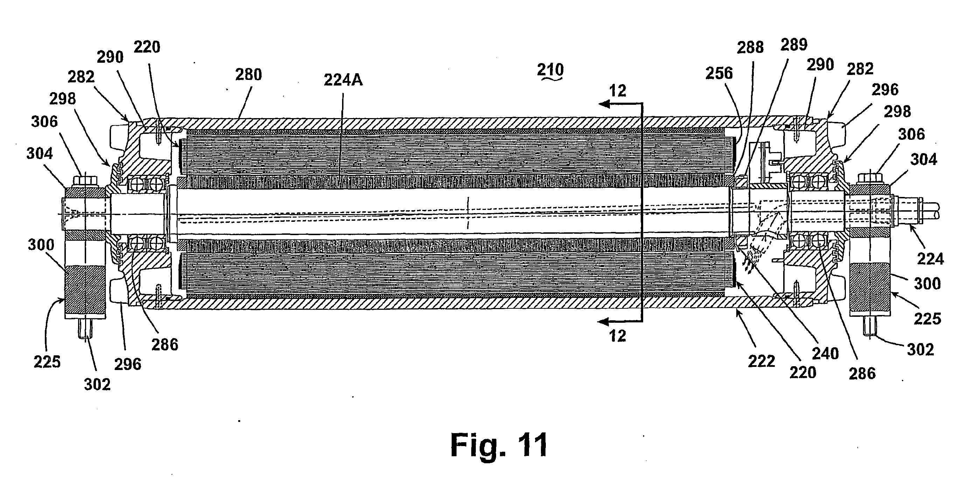

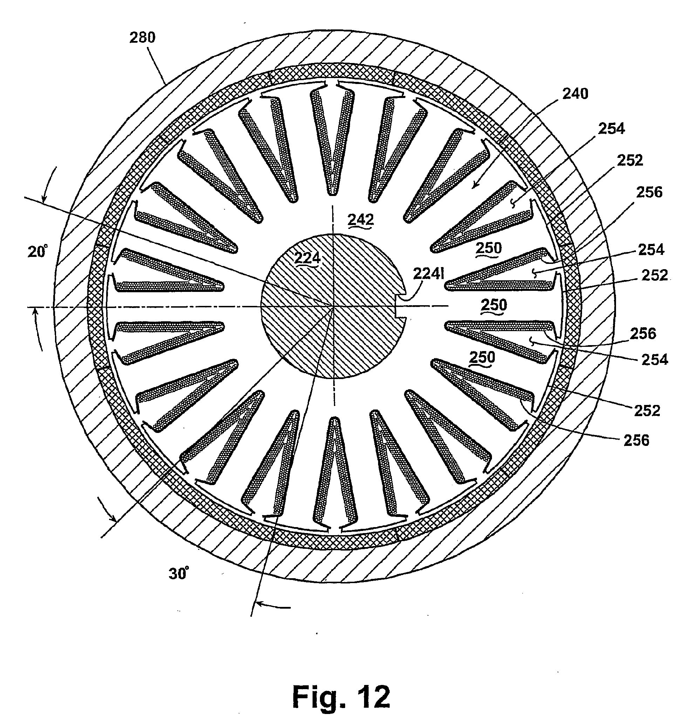

FIGS. 11-12 illustrate an alternative embodiment electric motor 210 according to the invention. The alternative embodiment electric motor 210 comprises many components physically and functionally similar to or identical with the first embodiment electric motor 10. Therefore, to the extent possible, components of the second embodiment similar to those of the first embodiment will have a similar identifying numeral increased by 200.

The electric motor 210 includes an electric control system 212 that contains all of the electronics for controlling the operation of the electric motor 210. The electric control system is identical to the control system 12 and is therefore not shown. The electric control system 12 can be accomplished by many well known control systems and does not form any fun-will not be described in detail. In general the control system 12 should be capable of directly or indirectly monitoring the location of the poles of each winding in relation to the pole of the permanent magnets and using this information to control the switching of the current through the windings to effect the rotation of the rotor (forward or reverse), motor speed (generally by changing the amplitude of the voltage), motor acceleration/deceleration, which can include braking.

The electric motor 210 comprises a stator 220 mounted within a rotor 222. The stator 220 is fixedly mounted to a non-rotating shaft 224. The rotor 222 is rotatably mounted to the shaft 224. The ends of the shaft are fixedly held by mounting blocks 225, which mount the shaft to a structural element of the conveyor system or a structural element of the particular application.

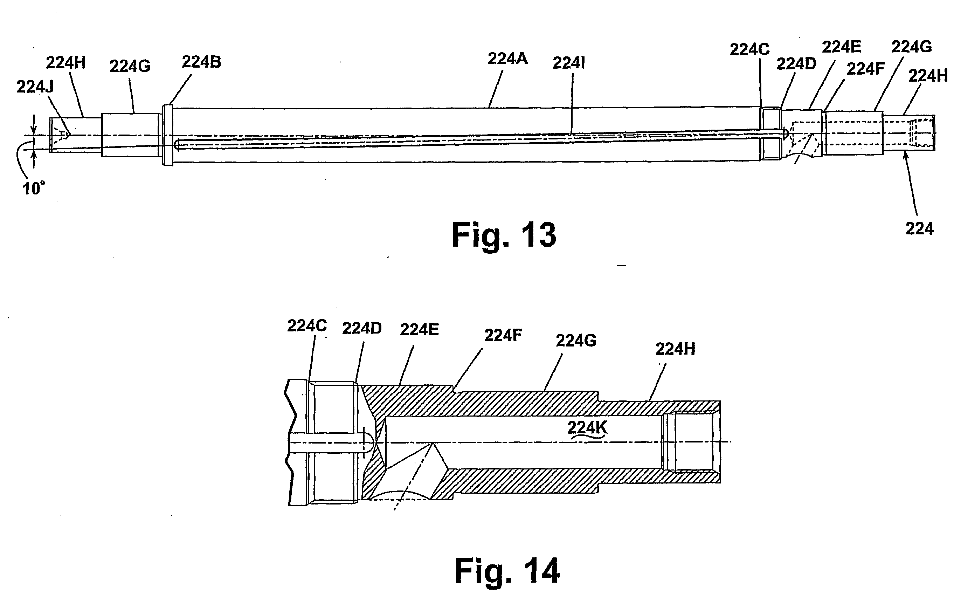

Referring to FIGS. 13 and 14, the shaft 224 comprises a constant diameter central portion 224A that terminates at one end at an annular shoulder 224B and at another end in an annular neck 224C. The annular neck 224C transitions to a locking ring portion 224D, which then transitions into a reduced diameter sensor mounting portion 224E. An annular groove 224F is disposed between the sensor mounting portion 224E and a bearing mounting portion 224G. A reduced diameter key 224H extends from the bearing mounting portion 224G. The other end of the shaft 224 outward from the annular shoulder 224B is similar in structure in that it includes an annular groove 224F, bearing mounting portion 224G and a key 224H. A stator keyway 2241 extends along the length of the central portion 224A between the ends and is oriented at a 10 degree angle relative to a longitudinal axis 224J of the shaft 224, resulting in the opposing ends of the stator keyway being radially offset 20 degrees relative to each other. An electrical conduit 224K is provided in one end of the shaft and provides a passageway for electrical wiring from the control system to the windings and any internal sensors, such as a hall sensor.

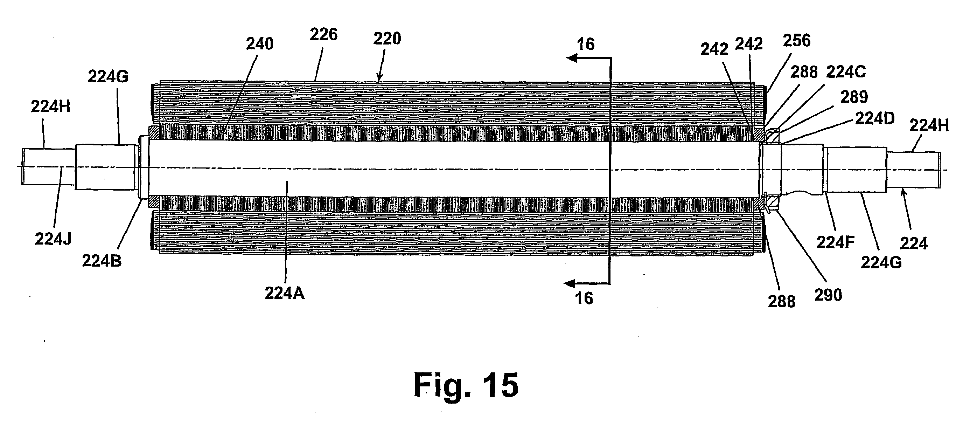

Referring to FIGS. 15-16, the stator 220 comprises a single winding assembly 226 fixedly mounted to the shaft 224 in comparison to the multiple winding assemblies 26 of the first embodiment. The single winding assembly 226 is similar in structure to the winding assemblies of the first embodiment in that it comprises a winding core 240 about which multiple windings 256 are mounted. The winding core 240, as with the winding core 40, comprises a plurality of disks 242, each of which has an axial opening 244 into which extends a key 246, which is sized to be received within the stator keyway 224I of the shaft as the disks are slid over the shaft. The disks form a series of winding poles 250 when they are mounted on the shaft. Each of the winding poles 250 terminate in a cap 252, which effectively retains the winding 256 thereto. The winding poles 250 are separated by winding channels 254.

The windings 256 are traditional and comprise wire wound about the winding poles 250. The winding channels 254 are filled with a resin, preferably a two component epoxy resin, to reduce vibrations.

The winding poles 250 are preferably spaced every 20° on center about the disk. Since the disk follow the stator keyway 224I, the opposing ends of each of the winding poles are radially offset 20° relative to each other, resulting in the opposing ends of adjacent winding poles being radially aligned. In other words, presuming a given direction of rotation, each winding will have a leading end and a trailing end.

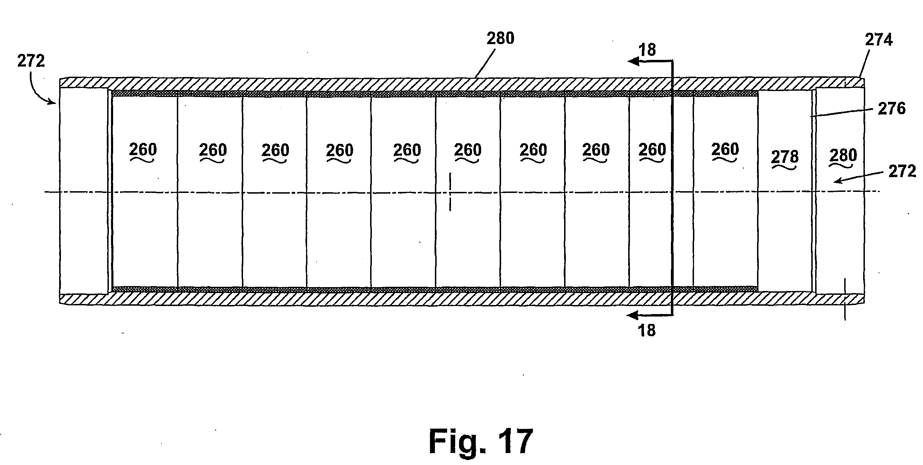

The trailing end of one winding is radially aligned with the leading end of the trailing winding. Referring to FIGS. 11, 12, 17, and 18, the rotor 222 for the second embodiment electric motor 210 is different than the first embodiment electric motor 10 in that a rotor cage is not necessary since the permanent magnets are mounted directly to the exterior housing. The second embodiment rotor 222 comprises a housing 280 in which are slidably received multiple metal rings 260.

The housing 280 is essentially identical to the housing 80 of the first embodiment. The housing 280 has a generally cylindrical shape with open ends 272. The exterior of the housing has a tapered portion 274 adjacent the open ends 272. An annular collar 276 is positioned within the hollow interior of the housing and forms a demarcation between a first inner diameter 278 and a second inner diameter 280. The first inner diameter corresponds to the outer diameter of the rings 260. The second inner diameter 280 extends from the collar 276 to the open end 272 and is greater in diameter than the first inner diameter 278.

The metal rings 260 are bonded to the interior of the housing 280 once they are positioned at their desired location. Preferably, the metal rings are made from neodymium iron boron. In the illustrated embodiment, the rings have an outer diameter of 10.43 centimeters and an inner diameter of 9.83 centimeters. Each of the rings is 3.35 centimeters wide, with 10 rings extending across the interior of the housing 280 for a total length of 33.5 centimeters.

The metal rings 260 are magnetized after they are bonded to the interior of the housing 280. The magnetization of the metal rings 260 after their insertion and mounting 10 the housing 280 substantially eliminates the assembly difficulties associated with the first embodiment rotor related to the strength of the neodymium iron boron magnets.

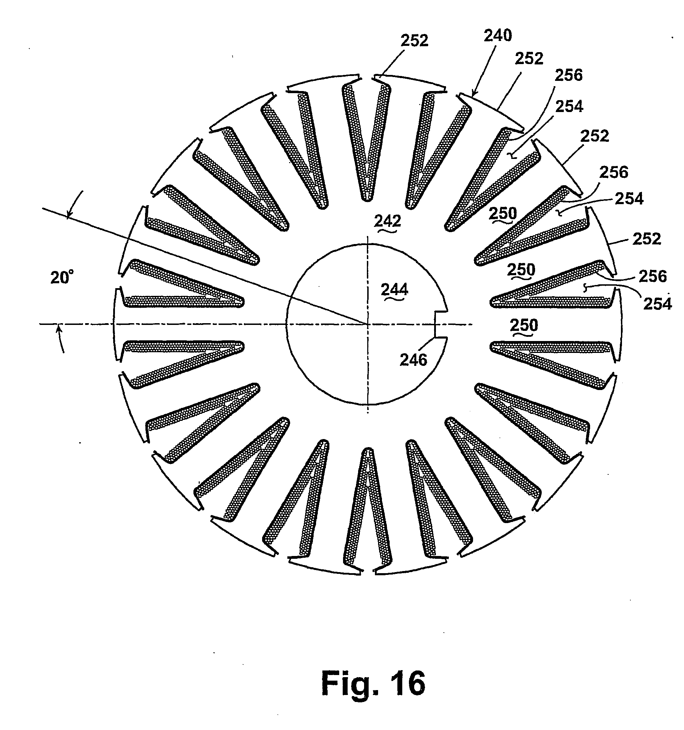

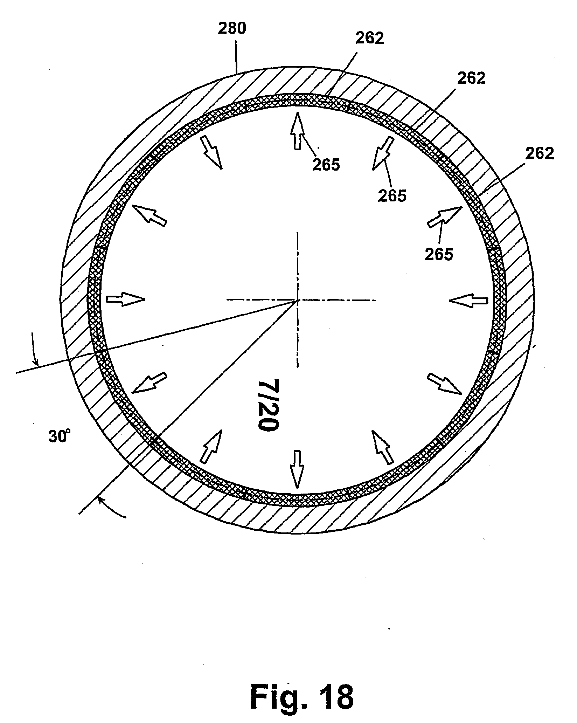

Referring to FIG. 18, the metal rings 260 are magnetized in a manner such that each ring has segments 262 of alternating magnetic flux direction. The arrows 265 in FIG. 16 show the direction of the magnetic field for the corresponding segment 262. Preferably, the segments 262 alternate in magnetic flux approximately every 30° on center about the ring 260.

The 30° spacing of the segments 262 cooperates with the 20° spacing of each of the winding cores such that as the leading end of one winding pole is rotating beyond a given segment 262, approximately one half (a 10° arc) of the trailing winding pole is disposed beneath the given segment. The overlap between the adjacent windings and the given segment results in a more continuous power output for the motor as compared to the first motor where there is no overlap in the windings relative to a given segment or magnet. The amount of overlap between adjacent windings and a given magnet can vary depending on the power output requirements of the motor.

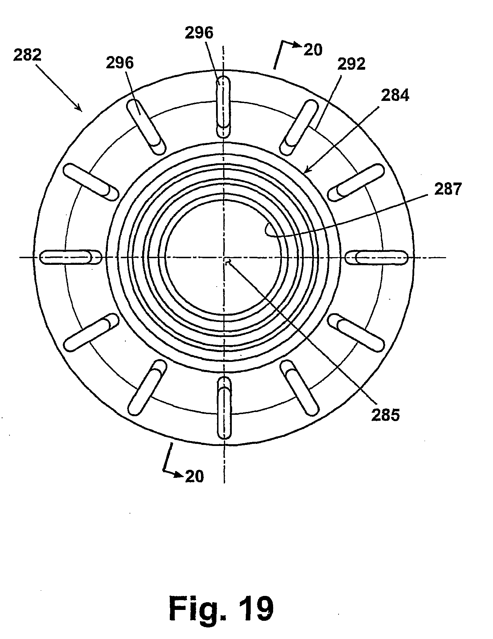

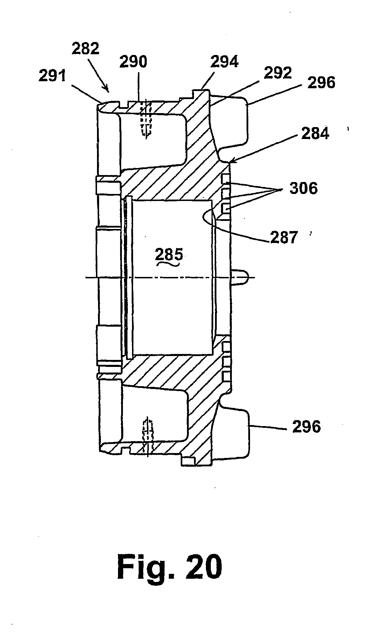

The controller switches the current through the windings 256 in much the same manner as the windings 56 to effect the rotation of the rotor 220. In essence, the current is switched direction when the centerline of the permanent magnet passes the centerline of the corresponding winding so that the winding initially pulls the permanent magnet toward the winding centerline and then pushes the permanent magnet away from the winding centerline. It should be noted that the angular orientation of the windings relative to the longitudinal axis of the permanent magnets will typically lead to the switching of the current as the longitudinal center point of the permanent magnet passes the longitudinal center point of the winding. Referring to FIGS. 19-20, end caps 282 are provided to close the open ends 272 of the housing 280. The end caps 282 are identical to the end caps 82 and comprise a central hub 284 defining a through opening 285 having a stop 287, which collectively form a seat for ceramic bearing 286. An annular groove 288 is located at the inner end of the central hub. A peripheral wall 290 connected by a radial web 292 extending from the central hub 284. A portion of the radial web 292 extends beyond the peripheral wall 290 to form a peripheral stop 294. The tips of the peripheral wall 290 are tapered 291 to aid in the insertion of the end caps into the housing 280. Fins 296 extend outwardly from the radial web 292.

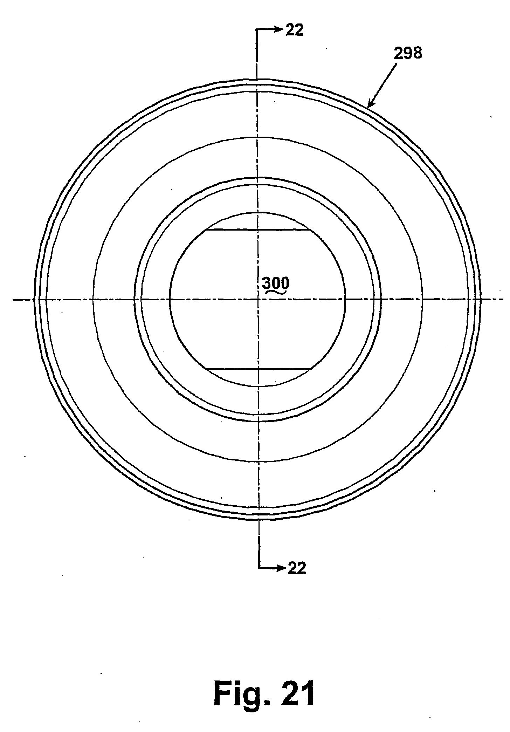

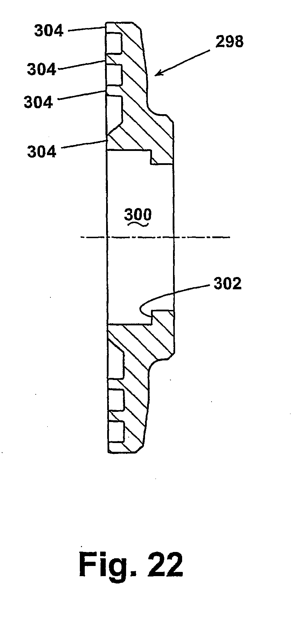

Referring to FIGS. 21 and 22, a cover 298 is provided and has an axial opening 300 into which extends an annular stop 302. Concentric rings 304 are formed on the inner surface of the cover 298 and mesh with concentric rings 306 circumscribing the central hub opening to form a labyrinth seal when the cover 298 is mounted to the end cap 282.

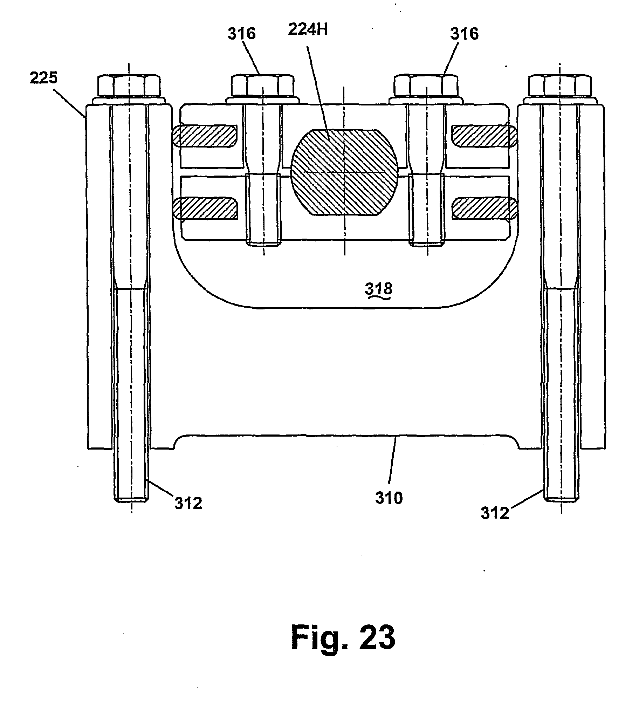

FIG. 23 illustrates the mounting block 225, which comprises a base 310 from which extend threaded mounting studs 312. A clamping yoke 314 compressively retaines the end key 224H against by with bolts 316. The yoke 314 is received within a recess 318 in the base 310.

The assembly of the second embodiment electric motor 210 will now be described. As with the first embodiment, electric motor 10, the exact sequence of the assembly steps is not important to the invention. The assembly steps are merely described for a better understanding of the invention and the sequence should not be considered limiting.

The stator 220 is assembled by sliding the multiple disks 242 onto the control end of the shaft 224. The key 246 of each disk is aligned with the shaft keyway 224I as the disks 242 are inserted thereon. The alignment of the disk key 246 with the shaft keyway 224I and the sliding insertion of the disk 242 over the shaft 224 builds the winding poles 250 of the winding core 240.

Once the disks 242 are mounted on the shaft 224, a spacer 288 is slidably mounted over the shaft and held in abutting contact with the disks 242 by a lockwasher 289. The lock washer 289 compressively retains the disks against the collar 224B. The windings 256 are then formed by wrapping wire around the winding poles 250 in a traditional manner.

Once the windings 256 are assembled around the winding poles 250, the stator 220 and rotor 222 can be assembled. Preferably, the stator 220 is slidably inserted into the interior of the rotor 222. Since the rings 260 will have preferably already been magnetized, the stator 220 will be drawn into contact with the magnetized rings 260 of the rotor 222. The stator 220 can then be slidably inserted through the interior of the rings 260 of the rotor 222. As with the first embodiment, a lubricant can be used to reduce the coefficient of friction between the stator 220 and the rotor 222.

The mounting of the end caps 82 and bearing 86 to the housing 280 is identical to that previously described with the first embodiment and will not be described in detail. Once the end caps 282, ceramic bearings 286, and cover 298 are assembled, the assembly is ready to be mounted to the mounting blocks 225. The keys 224H on each end of the shaft 224 are slidably inserted into a keyhole 340 in the mounting blocks. Bolts 342 extend through the mounting block and the clamping. Nuts 344 are threaded onto an end of the bolt 342 and tightened to draw the clamping bar against the mounting block 225 to fixedly secure the shaft to the mounting blocks. The mounting blocks 225 include mounting bolts 346 extending therefrom for securing the mounting block to a structural support. The mounting blocks can then be mounted to any suitable structure.

While the invention has been specifically described in connection with certain specific embodiments thereof, it is to be understood that this is by war of illustration and not of limitation, and the scope of the appended claims should be construed as broadly as the prior art will permit.

## Claims

1. A belt conveyor **characterized by**:
a frame
an idler roller rotatably mounted to the frame a drive roller mounted to the frame spaced from the idler roller, wherein the drive roller comprises an electric motor having a shaft defining a longitudinal axis and having opposing ends fixedly mounted to the shaft and comprising multiple magnets radially spaced about the periphery of the stator, with each of the magnets having at least one predetermined pole;a controller coupled to the drive roller to control the direction of the current flow through the windings in such a manner to initiate and control the rotation of the rotor about the stator; and
an endless belt extending in tension around the idler roller and the rotor of the drive roller, whereby when current flows in the windings, the rotator will rotate about the longitudinal axis and urge the endless belt to move, and the controller will control the speed and direction of rotation, wherein the rotor comprises a tubular housing having a longitudinal axis and the magnets are operably coupled to the interior of the tubular housing so that the housing rotates relative to the stator and functions as an external drive mechanism for the electric motor, and wherein the rotor further comprises an end cap at least partially closing an open end of the housing and mounting the housing to the shaft, a plurality of fins being disposed on the end cap.

2. The belt conveyor according to claim 1, wherein the fins are interior of the housing.

3. The belt conveyor according to claim 1, wherein the fins are exterior of the housing.

4. A treadmill **characterized by**:
a frame
an idler roller rotatably mounted to the framea drive roller mounted to the frame from the idler comprises an electric motor having a shaft defining a longitudinal axis and having opposing ends fixedly mounted to the frame; a stator fixedly mounted to the shaft and having multiple windings capable of reversible current flow to alter the winding polarity; and a rotor rotatably mounted to the shaft and comprising multiple magnets radially spaced about the periphery of the stator, with each of the magnets having at least one predetermined pole;a deck disposed between the drive roller and the idler roller;a controller coupled to the drive roller to control the direction of the current flow through the windings in such a manner to initiate and control the rotation of the rotator about the stator; andan endless belt extending in tension around the idler roller, over the deck, and around the rotator of the drive roller, whereby when current flows in the windings, the rotator will rotate about the longitudinal axis and urge the endless belt to move, and the controller will control the speed and direction of rotation, wherein the rotor comprises a tubular housing having a longitudinal axis and the magnets are operably coupled to the interior of the tubular housing so that the housing rotates relative to the stator and functions as an external drive mechanism for the electric motor, and wherein the rotor further comprises an end cap at least partially closing an open end of the housing and mounting the housing to the shaft, a plurality of fins being disposed on the end cap.

5. The treadmill according to claim 4, wherein the fins are interior of the housing.

6. The treadmill according to claim 4, wherein the fins are exterior of the housing.

7. An electric motor comprising:
a shaft defining a longitudinal axis and having opposing ends adapted to be fixedly mounted to a structural support;
a stator fixedly mounted to the shaft and comprising multiple windings capable of reversible current flow to alter the winding polarity;
a rotor rotatably mounted to the shaft and comprising multiple magnets radially spaced about the periphery of the stator, with each of the magnets having at least one predetermined pole;
an end cap on the rotor; and
a controller coupled to the windings to control the direction of the current flow through the windings in such a manner to initiate and control the rotation of the rotator about the stator, **characterized by**:
a plurality of fins disposed on the end cap whereby when the rotator is rotating, the fins will transfer heat away from the rotor and the stator.

8. The electric motor according to claim 7 wherein the rotor and the end cap at least partially separate an interior from an exterior and the fins are interior of the housing.

9. The electric motor according to claim 7 wherein the rotor and the end cap at least partially separate an interior from an exterior and the fins are exterior of the housing.
